# EUROPEAN PATENT APPLICATION

(11) **EP 4 400 242 A1**
(43) Date of publication of application: **17.07.2024**
(21) Application number: 23219519.8
(22) Date of filing: 21.12.2023
(51) Int. Cl.: B23H 7/06, B23H 9/10, F01D 5/30

(54) **WIRE ELECTRICAL DISCHARGE MACHINING**

(30) Priority: 27.12.2022 US 202218089285
(71) Applicant: PRATT & WHITNEY CANADA CORP., Longueuil, Québec J4G 1A1 (CA)
(72) Inventor: ING, Visal, (01BE5) Longueuil, J4G 1A1 (CA); JEAN, Joel, (01BE5) Longueuil, J4G 1A1 (CA)
(74) Representative: Dehns

(57) **Abstract**

A method is provided for manufacturing a component. During this method, a workpiece (54) is provided. An aperture is machined into the workpiece (54) using an electrical discharge machining wire (62) supported by a guide (60A, 60B). The machining of the aperture includes moving the guide (60A, 60B) along a guide path (90) where the electrical discharge machining wire (62) cuts the workpiece (54) along a wire path (94) that is different than the guide path (90). A speed of the electrical discharge machining wire (62) is maintained during the cutting of the workpiece (54) along the wire path (94).

## Description

### TECHNICAL FIELD

This disclosure relates generally to electrical discharge machining to form a component such as an aircraft engine rotor disk.

### BACKGROUND INFORMATION

Wire electrical discharging machining ("wire-EDM") may be used to machine a root slot into a rotor disk for an aircraft engine. Various systems and methods are known in the art for wire electrical discharging machining. While these known machining systems and methods have various benefits, there is still room in the art for improvement.

### SUMMARY

According to an aspect of the present disclosure, a method is provided for manufacturing a component. During this method, a workpiece is provided. An aperture is machined into the workpiece using an electrical discharge machining wire supported by a guide. The machining of the aperture includes moving the guide along a guide path where the electrical discharge machining wire cuts the workpiece along a wire path that is different than the guide path. A speed of the electrical discharge machining wire is maintained during the cutting of the workpiece along the wire path.

According to another aspect of the present disclosure, a manufacturing method is provided. During this manufacturing method, a first component is provided. A first rough cut aperture is cut into the first component using an electrical discharge machining wire supported by a guide. The cutting of the first rough cut aperture includes moving the guide along a first guide path where the electrical discharge machining wire cuts the first component along a first wire path that is different than the first guide path. A second guide path is modeled based on a comparison between data for the first wire path and data for a predetermined cutting path. A second component is provided. A second rough cut aperture is cut into the second component using the electrical discharge machining wire supported by the guide. The cutting of the second rough cut aperture includes moving the guide along the second guide path where the electrical discharge machining wire cuts the second component along a second wire path that is different than the second guide path.

According to still another aspect of the present disclosure, another manufacturing method is provided. During this manufacturing method, an electrical discharge machining wire is provided spanning between and supported by a first guide and a second guide. A rotor blade root slot is cut into a rotor disk using the electrical discharge machining wire. A portion of the electrical discharge machining wire engaging the rotor disk is displaced from a reference line defined by the first guide and the second guide during the cutting of the rotor blade root slot. The first guide is moved along a guide path during the cutting of the rotor blade root slot at a constant speed. The guide path is tailored to accommodate for the displacement between the portion of the electrical discharge machining wire engaging the rotor disk and the reference line.

The following optional features may be applied to any of the above aspects:
The guide path may be tailored such that a wire path followed by the portion of the electrical discharge machining wire engaging the rotor disk substantially matches a predetermined cutting path.

The wire path followed by the portion of the electrical discharge machining wire engaging the rotor disk may be different than the guide path at least along curved portions of the rotor blade root slot.

The speed may be a federate speed of the electrical discharge machining wire longitudinally along the wire path.

The speed may be a wire speed of the electrical discharge machining wire.

The component may be configured as or otherwise include a rotor disk. The aperture may be configured as or otherwise include a slot in the rotor disk.

The aperture may be configured as or otherwise include a firtree slot.

The second path may follow a tortuous trajectory.

The method may also include modeling the guide path such that the wire path substantially matches a predetermined cutting path.

The guide path may be modeled based on data for another aperture previously machined using wire electrical discharge machining.

The cutting of the workpiece along the wire path may be a roughing pass for the machining of the aperture.

The machining of the aperture may also include performing a finishing pass and a polishing pass with the electrical discharge machining wire following the roughing pass.

The second wire path may substantially match the predetermined cutting path.

A speed of the electrical discharge machining wire may be maintained during the cutting of the first rough cut aperture along the first wire path. In addition or alternatively, a speed of the electrical discharge machining wire may be maintained during the cutting of the second rough cut aperture long the second wire path.

The method may also include measuring the first rough cut aperture to provide the data for the first wire path.

The method may also include: cutting a first finish cut aperture into the first component using the electrical discharge machining wire; and cutting a second finish cut aperture into the second component using the electrical discharge machining wire.

The method may also include: cutting a first polished aperture into the first component using the electrical discharge machining wire; and cutting a second polished aperture into the second component using the electrical discharge machining wire.

The first component may be configured as or otherwise include a rotor disk. The first rough cut aperture may be a rough cut slot in the rotor disk.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a bladed rotor for an aircraft engine.
FIG. 2 is a partial sectional illustration of a rotor disk for the bladed rotor.
FIG. 3 is a cross-sectional illustration of a portion of the rotor disk at a root slot.
FIG. 4A is a schematic illustration of a manufacturing system with a wire electrical discharge machining device.
FIG. 4B is a partial illustration of a nozzle with a guide engaging an electrical discharge machining wire.
FIG. 5 is a flow diagram of a method for manufacturing a machined component.
FIG. 6 is an illustration of a portion of the rotor disk at a rough cut aperture.
FIG. 7 is a partial schematic illustration of the wire electrical discharge machining device cutting an aperture such as the rough cut aperture.
FIG. 8 is an illustration schematically illustrating a bicycle effect.
FIG. 9 is an illustration of a portion of the rotor disk at a finish cut aperture.
FIG. 10 is an illustration of a portion of the rotor disk at a polished aperture which may form the root slot.
FIG. 11 is a schematic cross sectional illustration of a gas turbine engine.

### DETAILED DESCRIPTION

The present disclosure includes systems and methods for manufacturing a machined component for an aircraft engine. Herein, the term "manufacturing" may describe a process for forming and/or otherwise working on the engine component to create (or during the creation of) a brand new engine component. The term "manufacturing" may also or alternatively describe a process for overhauling (e.g., repairing) the engine component to restore one or more features of a previously formed engine component to brand new condition, similar to brand new condition or better than brand new condition. However, for ease of description, the manufacturing systems and methods may be described below with respect to creating the engine component.

The engine component may be any component for the aircraft engine with one or more machined apertures. The engine component, for example, may be configured as or otherwise include a machined rotor disk for an aircraft engine rotor. This aircraft rotor may be a ducted rotor or an un-ducted rotor. Examples of the ducted rotor include, but are not limited to, a ducted propulsor rotor (e.g., a fan rotor), a compressor rotor and a turbine rotor. An example of the un-ducted rotor is an un-ducted propulsor rotor such as a propeller rotor. The present disclosure, however, is not limited to the foregoing exemplary bladed rotor configurations and may be applicable to other aircraft air movers. The engine component is also not limited to engine rotor applications. The engine component, for example, may alternatively be configured as or otherwise include an engine case or a support structure. However, for ease of description, the engine component may be described and/or referred to below as the rotor disk.

The rotor disk may be configured for various aircraft engines. The rotor disk, for example, may be configured for a geared gas turbine engine where a gear train connects one or more shafts to one or more rotors in a fan section, a compressor section and/or any other engine section. Alternatively, the rotor disk may be configured for a direct-drive gas turbine engine without a gear train. The gas turbine engine may include a single spool, two spools or more than two spools. The gas turbine engine may be configured as a turbofan engine, a turbojet engine, a turboprop engine, a turboshaft engine, a propfan engine, a pusher fan engine or any other type of gas turbine engine. The present disclosure, however, is not limited to gas turbine engine applications. The rotor disk, for example, may alternatively be rotatably driven by or included as part of various other types of thermal engines such as, but not limited to, a reciprocating piston internal combustion engine or a rotary internal combustion engine. The rotor disk may alternatively be configured for non-thermal engine or hybrid applications where, for example, the rotor disk is rotatably driven by an electric motor or a hybrid engine. Furthermore, the present disclosure is not limited to engine applications nor to aircraft applications.

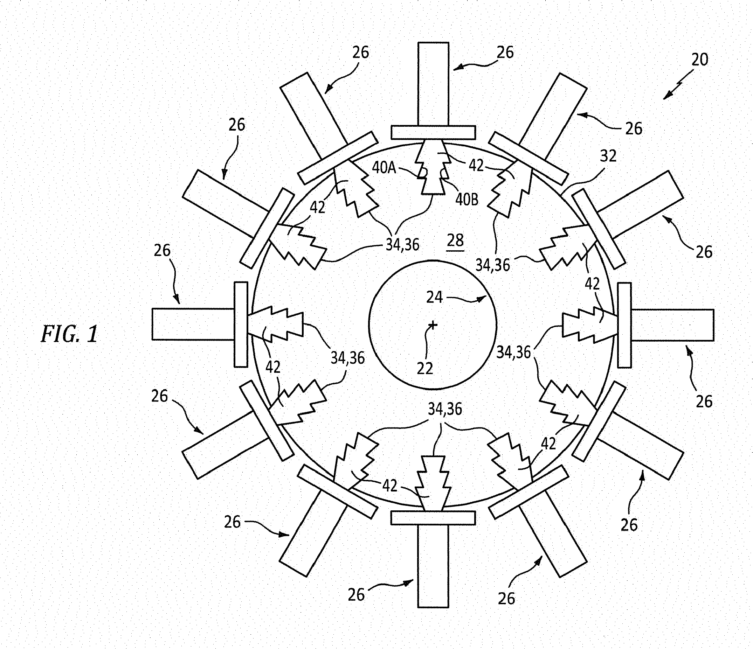

FIG. 1 illustrates an exemplary embodiment of a bladed rotor 20. This bladed rotor 20 is rotatable about a rotational axis 22 of the bladed rotor 20, which rotational axis 22 may also be an axial centerline of the bladed rotor 20. The bladed rotor 20 includes the rotor disk 24 and a plurality of rotor blades 26; e.g., compressor blades, turbine blades or propulsor blades such as fan blades or propeller blades.

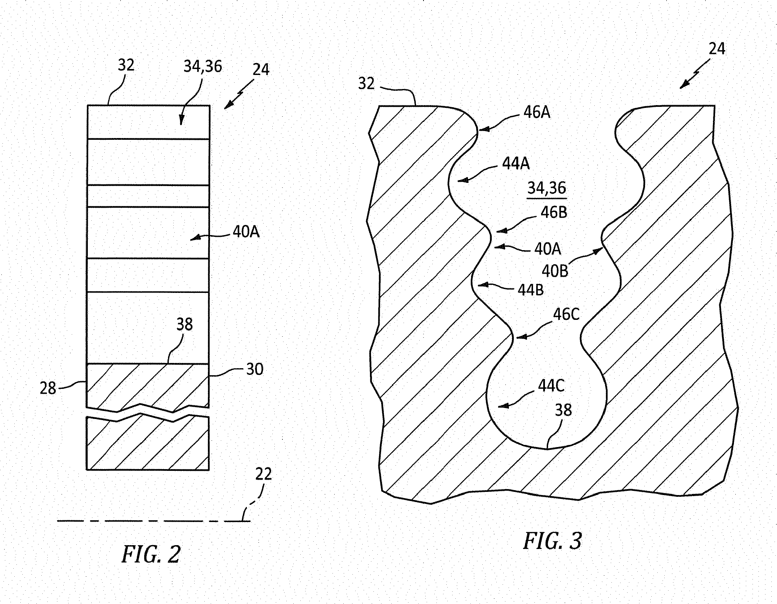

Referring to FIG. 2, the rotor disk 24 extends axially along the rotational axis 22 between and to a first end 28 (e.g., a forward and/or upstream end) of the rotor disk 24 and a second end 30 (e.g., an aft and/or downstream end) of the rotor disk 24. The rotor disk 24 projects radially out (in a direction away from the rotational axis 22) to a radial outer periphery 32 of the rotor disk 24. Referring to FIG. 1, the rotor disk 24 extends circumferentially about (e.g., completely around) the rotational axis 22. The rotor disk 24, for example, may be configured with a full-hoop annular geometry.

The rotor disk 24 is configured with a plurality of machined apertures 34 such as a plurality of root slots 36. These root slots 36 are distributed circumferentially about the rotational axis 22 in a circular array at the disk outer periphery 32. Referring to FIG. 2, each root slot 36 extends axially through the rotor disk 24 between the disk first end 28 and the disk second end 30. Each root slot 36 projects radially into the rotor disk 24 from the disk outer periphery 32 to a distal inner end 38 (e.g., a bottom end) of the respective root slot 36. Referring to FIG. 3, each root slot 36 extends laterally (e.g., circumferentially) within the rotor disk 24 between and to opposing lateral (e.g., circumferential) sides 40A and 40B (generally referred to as "40") of the respective root slot 36.

Each root slot 36 of FIG. 1 is configured as a receptacle for a root 42 (e.g., a mount portion) of a respective one of the rotor blades 26. More particularly, each root slot 36 is configured to receive the respective blade root 42 to mount the respective rotor blade 26 to the rotor disk 24. For example, referring to FIG. 3, each root slot 36 may be configured as a firtree slot. Each slot side 40 of the root slot 36 of FIG. 3, for example, is configured with a tortuous (e.g., wavy, undulating and/or curved (e.g., arcuate, circular, elliptical, splined, etc.)) sectional geometry when viewed, for example, in a reference plane perpendicular to the rotational axis 22. Each slot side 40 of FIG. 3 is formed by one or more recessions 44A-C (generally referred to as "44") (e.g., indentations, grooves, channels, etc.) and/or one or more projections 46A-C (generally referred to as "46") (e.g., ribs, humps, protuberances, etc.) interspersed with the recessions 44. Each recession 44 of FIG. 3, for example, projects laterally into the rotor disk 24 and may be disposed radially between and formed by a radially neighboring (e.g., adjacent) pair of the projections 46. An inner end of each recession 44 may have a concave (e.g., curved) sectional geometry in the reference plane. An outer end (e.g., tip) of each projection 46 may have a convex (e.g., curved) sectional geometry in the reference plane. The present disclosure, however, is not limited to such exemplary root slot configurations. Each root slot 36, for example, may alternatively be configured as a dovetail slot or any other type of keyed slot or aperture.

The rotor disk 24 is constructed from or otherwise includes metal and/or another electrically conductive material. Examples of the rotor disk material include, but are not limited to, stainless steel (ss), nickel (Ni) or nickel alloy, aluminum (Al) or aluminum alloy, titanium (Ti) or titanium alloy, and metal superalloy. The present disclosure, however, is not limited to the foregoing exemplary rotor disk materials.

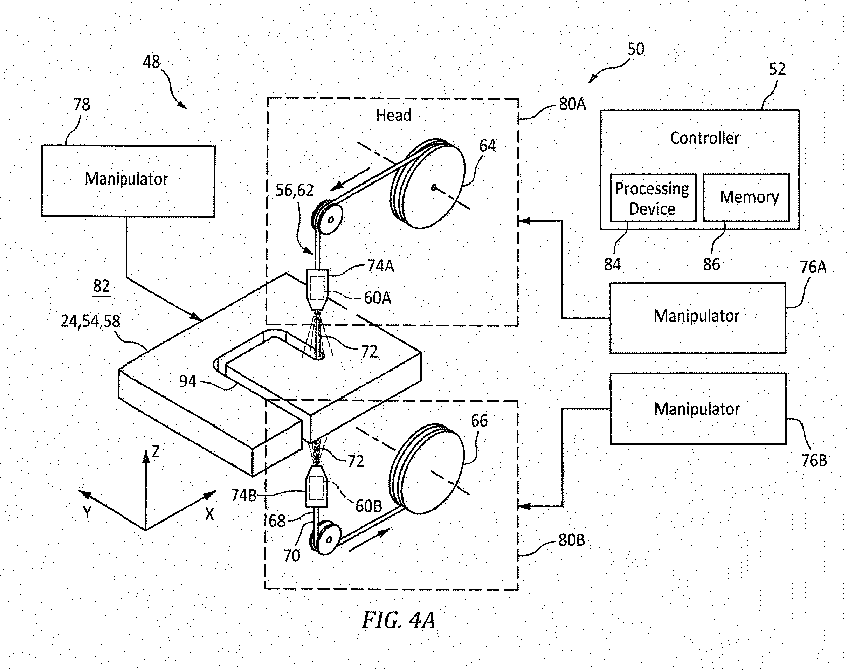

FIG. 4A illustrates a system 48 for manufacturing the rotor disk 24 or any other type of component with one or more machined apertures such as the root slots 36 or the like. This manufacturing system 48 includes a wire electrical discharge machining ("wire-EDM") device 50 and a controller 52 for automating operation of the wire-EDM device 50.

The wire-EDM device 50 is configured to cut electrically conductive material of a workpiece 54 to form a machined aperture. The wire-EDM device 50, for example, is configured to cut the material of the rotor disk 24 to form each root slot 36. This wire-EDM device 50 may cut the electrically conductive material by removing material through spark erosion induced by an electrical discharge from an electrode 56 of the wire-EDM device 50 to the electrically conductive material; here, an anode 58.

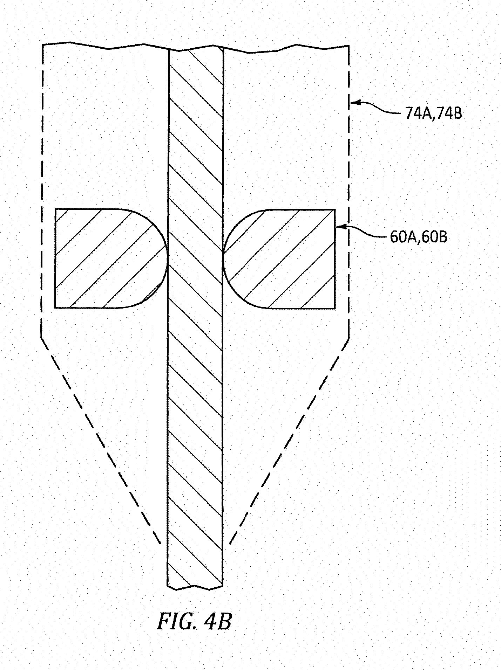

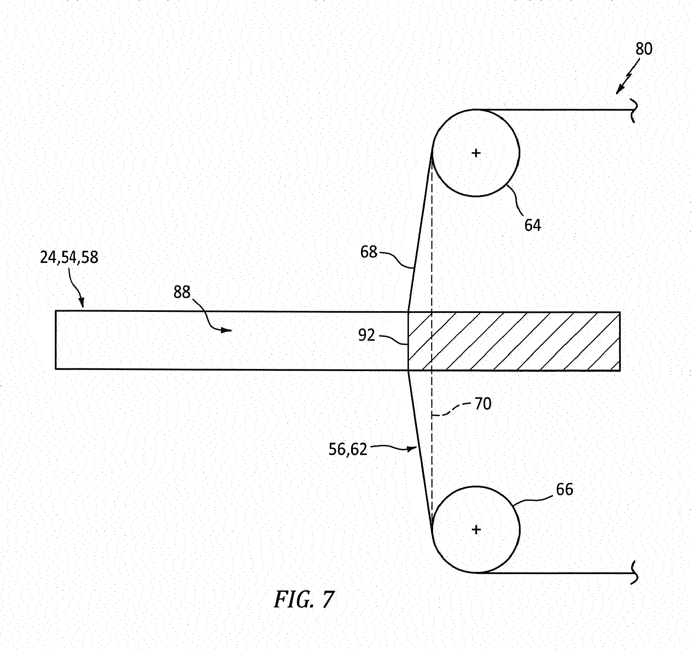

The wire-EDM device 50 of FIG. 4A includes the electrode 56 and one or more electrode guides 60A and 60B (generally referred to as "60"). Here, the electrode 56 is configured as an electrical discharge machining wire 62 ("EDM wire"). This EDM wire 62 of FIG. 4 extends between a wire spool 64 and a wire draw unit 66. The EDM wire 62 is supplied by (e.g., spooled out from) the wire spool 64, and the EDM wire 62 is collected by (e.g., wound onto) the wire draw unit 66. A portion of the EDM wire 62 between the wire spool 64 and the wire draw unit 66 is supported by and spans between the guides 60. These guides 60 are configured such that a working portion 68 of the EDM wire 62 spanning between the guides 60 extends along a (e.g., straight) reference line 70 (see also FIG. 7) defined by the guides 60, for example at least prior to cutting the electrically conductive material, cutting at slow speeds, etc. The working portion 68 of the EDM wire 62, for example, is pulled taught between the guides 60. However, during the cutting of the electrically conductive material, the EDM wire 62 may bend and/or otherwise deflect and may thereby be laterally displaced from the reference line 70 as described below in further detail (see also FIG. 7). Here, one or more of the guides 60 may each be configured as part of and/or within a nozzle 74A, 74B (generally referred to as "74"). For example, referring to FIG. 4B, each guide 60 may be configured as a (e.g., ceramic) guide block through which the EDM wire 62 extends and is laterally positioned / supported.

Referring to FIG. 4A, to facilitate the electrical discharge from the EDM wire 62 (the electrode 56) to the electrically conductive material (the anode 58), the wire-EDM device 50 may include a dielectric fluid 72. This dielectric fluid 72 may be directed to a cut location by the nozzles 74. The dielectric fluid 72, for example, may be directed out of each nozzle 74 as a high pressure fluid jet which surrounds the EDM wire 62. The dielectric fluid 72 may also or alternatively be supplied as a bath; e.g., a volume of the dielectric fluid 72 into which the electrically conductive material may be partially or completely submersed.

The wire-EDM device 50 may include one or more manipulators 76A, 76B and 78. Each head manipulator 76A, 76B (generally referred to as "76") may be configured to move a respective head 80A, 80B (generally referred to as "80") of the wire-EDM device 50 within a workspace 82. Here, each EDM device head 80 includes and/or supports at least (or only) the guides 60 and the working portion 68 of the EDM wire 62. The head manipulators 76 may thereby move the working portion 68 of the EDM wire 62 within the workspace 82. For example, the head manipulator 76A may move the head 80A and its guide 60A in X, Y and Z directions within the workspace 82. The head manipulator 76B may move the head 80B and its guide 60B in the X and Y directions within the workspace 82. The workpiece manipulator 78 may be configured to move the workpiece 54 in the X and Y directions within the workspace 82. Each manipulator 76, 78 may be configured as or otherwise include a robotic arm, a gantry system, a movably carriage, etc. However, various other types and configurations of manipulators are known in the art, and the present disclosure is not limited to any particular ones thereof. Furthermore, while the wire-EDM device 50 of FIG. 4 may include all of the manipulators 76 and 78 to facilitate moving the working portion 68 of the EDM wire 62 relative to the workpiece 54 for cutting the aperture into the workpiece 54, one of the manipulators 76 or the manipulator 78 may alternatively be omitted in other embodiments. For example, the relative movement between the working portion 68 of the EDM wire 62 relative and the workpiece 54 may be facilitated by (e.g., only) the head manipulator 76A and/or 76B or the workpiece manipulator 78.

The controller 52 of FIG. 4A is in signal communication (e.g., hardwired and/or wirelessly coupled) with the wire-EDM device 50. The controller 52, for example, may be in signal communication with the device manipulators 76 and 78 as well as with one or more actuators facilitating feeding of the EDM wire 62 between the coils 64 and 66. The controller 52 may be in signal communication with a source supplying the dielectric fluid 72; e.g., to the nozzle 74. The controller 52 may also be in signal communication with a power source providing electrical power (e.g., electricity) to the EDM wire 62; e.g., the electrode 56.

The controller 52 may be implemented with a combination of hardware and software. The hardware may include at least one processing device 84 and a memory 86, which processing device 84 may include one or more single-core and/or multi-core processors. The hardware may also or alternatively include analog and/or digital circuitry other than that described above.

The memory 86 is configured to store software (e.g., program instructions) for execution by the processing device 84, which software execution may control and/or facilitate performance of one or more operations such as those described in the methods below. The memory 86 may be a non-transitory computer readable medium. For example, the memory 86 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

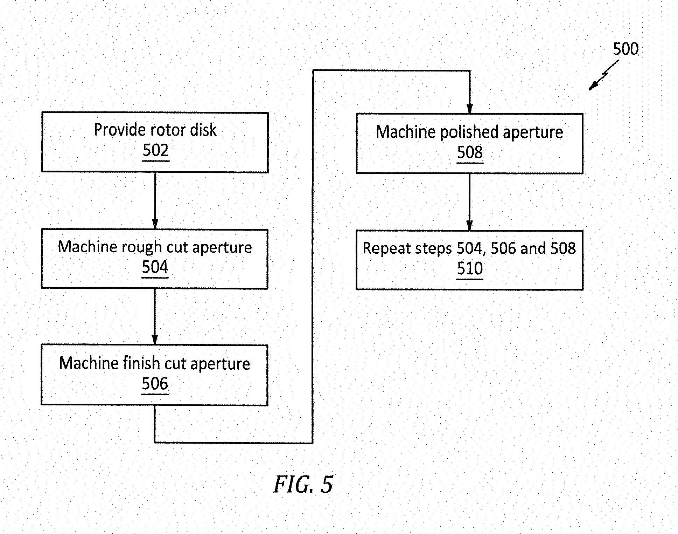

FIG. 5 is a flow diagram of a method 500 for manufacturing a machined component such as a rotor disk. For ease of description, the manufacturing method 500 is described with respect to the rotor disk 24 of FIGS. 1-3 and the manufacturing system 48 of FIGS. 4A and 4B. The manufacturing method 500, however, is not limited to manufacturing such an exemplary rotor disk (nor machined component) nor to using such an exemplary manufacturing system.

In step 502, the rotor disk 24 is provided in a preform state. Herein, the term "preform" may describe a body that approximately or substantially has a common (the same) configuration (e.g., geometry, structural characteristics, etc.) as the rotor disk 24 to be manufactured. For example, the rotor disk 24 provided during the step 502 may be a version of the rotor disk 24 of FIGS. 1-3 that is configured without the root slots 36; e.g., a rotor disk blank. The rotor disk 24 (in its preform state) may be formed using various manufacturing techniques. The rotor disk 24, for example, may be cast, machined, additively manufactured and/or otherwise formed as a single monolithic body. The present disclosure, however, is not limited to such exemplary manufacturing techniques.

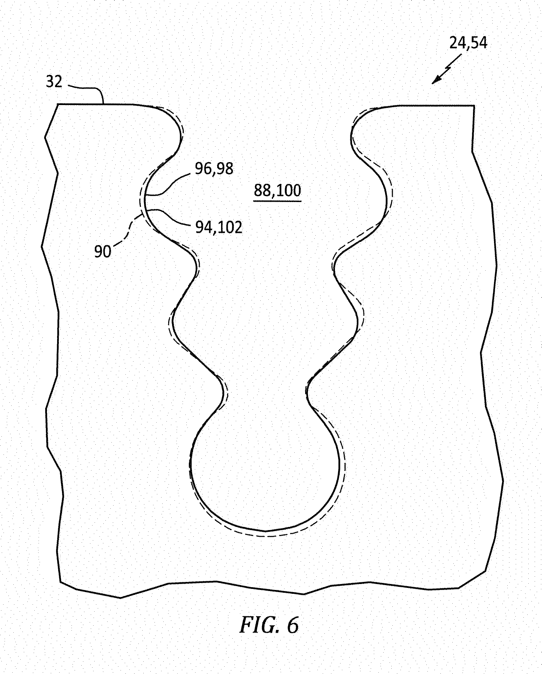

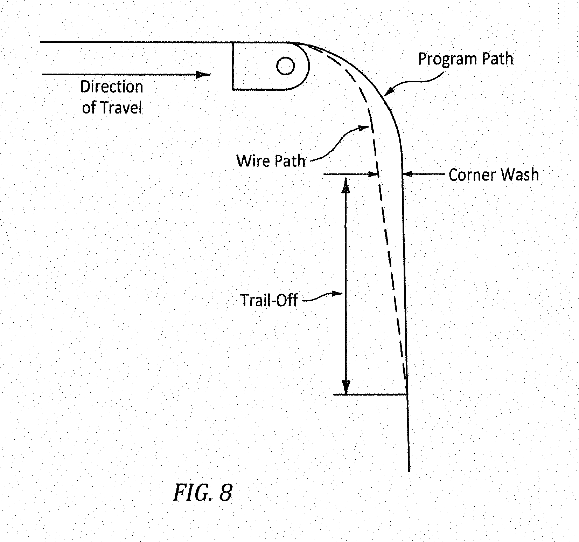

In step 504, referring to FIG. 6, a rough cut aperture 88 (e.g., a rough cut slot) is cut into the rotor disk 24 (the workpiece) using the wire-EDM device 50 and its EDM wire 62. The device head 80 and the rotor disk 24, for example, may be moved relative to one another such that each guide 60 moves along a guide path 90 relative to the rotor disk 24; e.g., each guide 60 moves within the reference plane. Referring to FIGS. 6 and 7, a portion 92 of the EDM wire 62 engaging the rotor disk 24 and its electrically conductive material may similarly follow a wire path 94. As each guide 60 moves along its guide path 90 during the cutting of the rough cut aperture 88, the portion 92 of the EDM wire 62 engaging the rotor disk 24 and its electrically conductive material may be laterally displaced from the reference line 70, for example, in a plane of perpendicular to the reference line 70; e.g., the reference plane. Interaction between the EDM wire 62 and the rotor disk 24, in particular, may cause the EDM wire 62 spanning between the guides 60 to deflect and drag behind the guides 60 and, thus, the reference line 70. Referring to FIG. 6, during some movements (e.g., cutting a straight line), the wire path 94 may be coincident with and follow the guide path 90. However, during other movements (e.g., cutting a curved line and/or following a tortuous trajectory), the wire path 94 may diverge from and no longer follow the guide path 90. The wire path 94, for example, may cut corners (e.g., curves) in the guide path 90. Thus, the wire path 94 during at least a portion (or an entirety) of the cutting of the rough cut aperture 88 may be different than the guide path 90. This difference in paths 90 and 94 may be called a "bicycle effect", a detailed example of which is shown in FIG. 8.

The rough cut aperture 88 is designed to have a certain geometry. If the guide path 90 is programmed to (e.g., completely) follow a perimeter 96 of the rough cut aperture design geometry (without any compensation for the bicycle effect), then a perimeter 98 of the actual rough cut aperture 100 would not match the rough cut aperture design geometry due to the bicycle effect discussed above unless, for example, a federate speed of the EDM wire 62 is slowed, wire tension is increased and/or dielectric fluid injection pressure is reduced for example. Therefore, the controller 52 is configured to signal the manipulator(s) 76 and 78 such that the wire path 94 (e.g., completely) coincides with and follows the perimeter 96 of the rough cut aperture design geometry. The guide path 90, for example, may be modeled (e.g., adjusted) to account for the bicycle effect such that the wire path 94 follows (is the same as) a predetermined cutting path 102; e.g., a design space cutting path, a predicted cutting path, etc. This modeling may be performed using data from previously cut rough cut apertures 88 and/or using other data and/or models. The guide path 90 is also modeled such that a speed of the EDM wire 62 may be maintained (e.g., constant) during the (e.g., entire) cutting of the rough cut aperture 88. In particular, a federate speed and/or a wire speed of the EDM wire 62 may be maintained constant. The term "federate speed" may describe a cutting speed that the EDM wire 62 cuts through the rotor disk 24 and its electrically conductive material along the wire path 94. The term "wire speed" may describe a speed the EDM wire 62 moves from the wire spool 64 to the wire draw unit 66. By maintaining the speed of the EDM wire 62 constant and at a high rate, the rough cut aperture 88 may be formed in a relatively short period of time. Furthermore, by adjusting the guide path 90 to account for the bicycle effect, the rough cut aperture 88 may substantially (e.g., within bounds of acceptable tolerances) or completely match (e.g., be the same as) the rough cut aperture design geometry. In this manner, the manufacturing method 500 may significantly reduce cycle time compared to other manufacturing processes which reduce EDM wire speed in order to more closely match a wire path to a guide path.

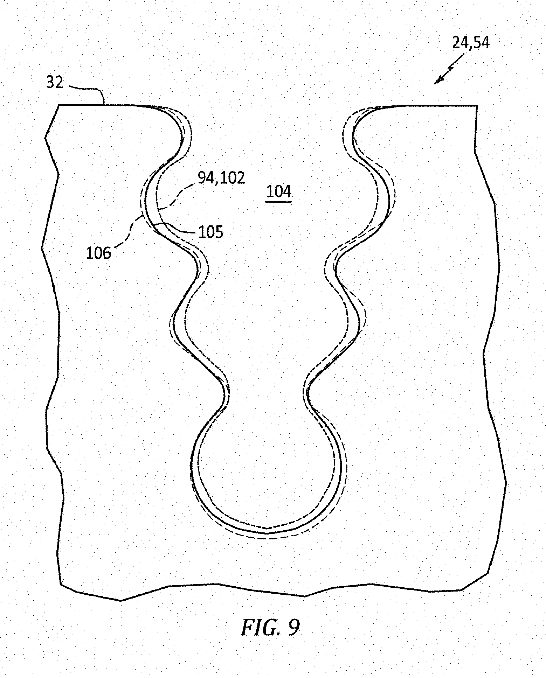

In step 506, referring to FIG. 9, a finish cut aperture 104 (e.g., a finish cut slot) is cut into the rotor disk 24 using the wire-EDM device 50 and its EDM wire 62. The device head 80 and the rotor disk 24, for example, may be moved relative to one another such that each guide 60 moves along a guide path 106 relative to the rotor disk 24. This guide path 106 may be modeled in a similar manner as discussed above with respect to the roughing cut of step 504. The guide path 106, for example, may be modeled such that a wire path 105 of the EDM wire 62 follows a perimeter of the finish cut aperture in design space. The present disclosure, however, is not limited to such an exemplary guide path modeling methodologies. Another example of a methodology for controlling a finish cut pass, for example, is disclosed in U.S. Patent No. 11,338,381, the disclosure of which is assigned to the assignee of the present disclosure and incorporated by reference in its entirety. Here, the finish cut aperture 104 is generally an enlargement of the rough cut aperture 88.

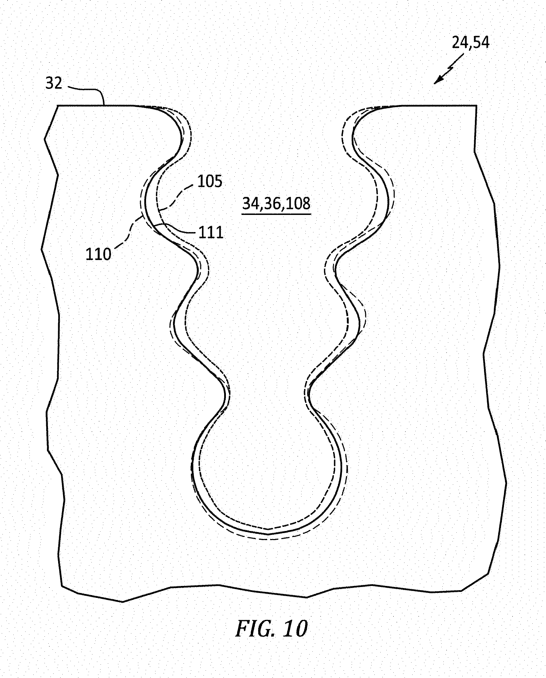

In step 508, referring to FIG. 10, a polished aperture 108 (e.g., a polished slot) is cut into the rotor disk 24 using the wire-EDM device 50 and its EDM wire 62. The device head 80 and the rotor disk 24, for example, may be moved relative to one another such that each guide 60 moves along a guide path 110 relative to the rotor disk 24. This guide path 110 may be modeled in a similar manner as discussed above with respect to the roughing cut of step 504. The guide path 110, for example, may be modeled such that a wire path 111 of the EDM wire 62 follows a perimeter of the polished aperture in design space. The present disclosure, however, is not limited to such an exemplary guide path modeling methodologies. Another example of a methodology for controlling a polish cut pass, for example, is disclosed in the U.S. Patent No. 11,338,381. Here, the polished aperture 108 is generally an enlargement of the finish cut aperture 104. This polished aperture 108 may be a final / complete version of the root slot 36 being machined into the rotor disk 24.

In step 510, one or more of the machining steps 504, 506 and/or 508 may be repeated one or more times to form each of the root slots 36 in the rotor disk 24. In some embodiments, each machining step 504, 506, 508 may be performed to (e.g., completely) form a respective root slot 36 before performing the machining steps 504, 506 and 508 at another location to form another respective root slot 36. However, in other embodiments, the rough cut machining step 504 may be repeated multiple times to form the rough cut aperture 88 for each root slot 36 before moving onto the finish cut machining step 506 for (e.g., any) of the root slots 36. The finish cut machining step 506 may be repeated multiple times to form the finish cut aperture 104 for each root slot 36 before moving onto the polishing cut machining step 508 for (e.g., any) of the root slots 36. Then, the polishing cut machining step 508 may be repeated multiple times to (e.g., complete) formation of the root slots 36.

In some embodiments, each time a rough cut aperture 88 of FIG. 6 is formed, one or more dimensions of that rough cut aperture 88 may be measured. Data including or derived from these measurements may be compared to data for the rough cut aperture design geometry to determine a difference between the wire path 94 and the perimeter 96 of the rough cut aperture design geometry. This information may then be used to further adjust the modeling of the guide path 90 such that during the formation of the next (e.g., subsequently formed) rough cut aperture 88, the wire path 94 may more closely match the perimeter 96 of the rough cut aperture design geometry. This measurement and adjustment may be performed following a select or each performance of the rough cutting step 504, and until the deviation between the wire path 94 and the perimeter 96 of the rough cut aperture design geometry is within acceptable tolerance. In general, a higher the number of measurements taken along the wire path 94, the more accurate the adjustment. For example, a profile of the slot may be divided into very small segments (e.g., as small as a few microns).

In some embodiments, the guide path 90 to machine the rough cut aperture 88 in a rotor disk 24 may be adjusted based on data derived from the machining of a previous rough cut aperture 88 in that same rotor disk 24. In other words, the modeling for the guide path 90 may be updated while machining in a common (the same) rotor disk 24. However, in other embodiments, the guide path 90 to machine the rough cut aperture 88 in one rotor disk may be adjusted based on data derived from the machining of a previous rough cut aperture 88 in another rotor disk; e.g., a previously machined rotor disk.

The manufacturing method 500 is described above utilizing an exemplary three pass technique - the rough cut pass, the finishing cut pass and the polishing pass. The present disclosure, however, is not limited to exemplary three pass technique. For example, any number of skimming passes (e.g., the finishing cut pass and/or the polishing pass) may be performed following the rough cut pass. For example, in some embodiments, the step 508 may be omitted where the step 506 provides a finished root slot. In another example, one or more additional skimming passes may be performed following the step 508.

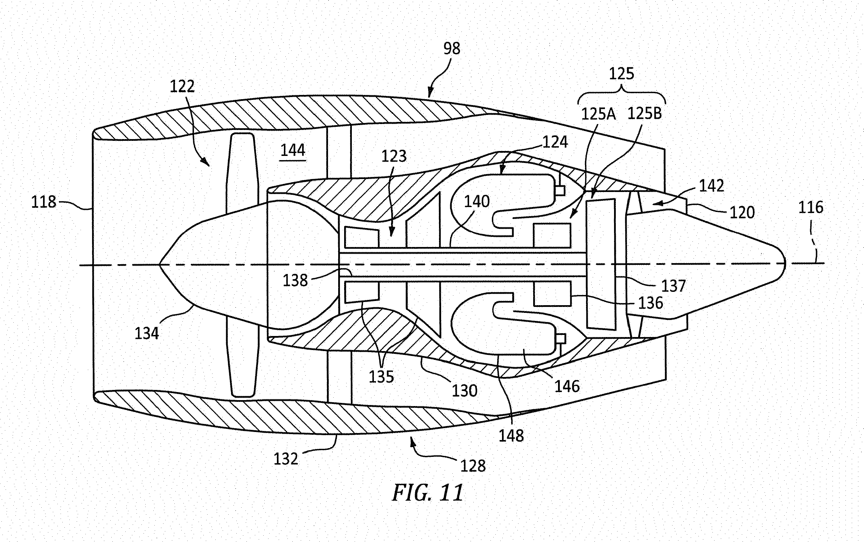

FIG. 11 illustrates an exemplary embodiment of the apparatus (e.g., the aircraft drive unit) configured as a gas turbine engine 114, which gas turbine engine 114 may include the bladed rotor 20 and its rotor disk 24. The gas turbine engine 114 extends axially along an axial centerline 116 (e.g., the rotational axis 22) between an upstream airflow inlet 118 and a downstream airflow exhaust 120. The gas turbine engine 114 includes a fan section 122, a compressor section 123, a combustor section 124 and a turbine section 125. The turbine section 125 includes a high pressure turbine (HPT) section 125A and a low pressure turbine (LPT) section 125B; e.g., a power turbine section.

The engine sections 122-125B are arranged sequentially along the axial centerline 116 within an engine housing 128. This engine housing 128 includes an inner case 130 (e.g., a core case) and an outer case 132 (e.g., a fan case). The inner case 130 may house one or more of the engine sections 123-125B; e.g., a core of the gas turbine engine 114. The outer case 132 may house at least the fan section 122.

Each of the engine sections 122, 123, 125A and 125B includes a respective bladed rotor 134-137, any one of which may be or include the bladed rotor 20 (see FIG. 1). Each of these bladed rotors 134-137 includes a plurality of rotor blades arranged circumferentially around and connected to one or more respective rotor disks. The rotor blades, for example, may be mechanically fastened to the respective rotor disk(s).

The fan rotor 134 is connected to and driven by the LPT rotor 137 through a low speed shaft 138. The compressor rotor 135 is connected to and driven by the HPT rotor 136 through a high speed shaft 140. The shafts 138 and 140 are rotatably supported by a plurality of bearings (not shown). Each of these bearings is connected to the engine housing 128 by at least one stationary structure such as, for example, an annular support strut.

During operation, air enters the gas turbine engine 114 through the airflow inlet 118. This air is directed through the fan section 122 and into a core flowpath 142 and a bypass flowpath 144. The core flowpath 142 extends sequentially through the engine sections 123-125B; e.g., the engine core. The air within the core flowpath 142 may be referred to as "core air". The bypass flowpath 144 extends through a bypass duct, which bypasses the engine core. The air within the bypass flowpath 144 may be referred to as "bypass air".

The core air is compressed by the compressor rotor 135 and directed into a combustion chamber 146 of a combustor 148 in the combustor section 124. Fuel is injected into the combustion chamber 146 and mixed with the compressed core air to provide a fuel-air mixture. This fuel-air mixture is ignited and combustion products thereof flow through and sequentially cause the HPT rotor 136 and the LPT rotor 137 to rotate. The rotation of the HPT rotor 136 drives rotation of the compressor rotor 135 and, thus, compression of the air received from a core airflow inlet. The rotation of the LPT rotor 137 drives rotation of the fan rotor 134, which propels bypass air through and out of the bypass flowpath 144. The propulsion of the bypass air may account for a majority of thrust generated by the gas turbine engine 114.

The gas turbine engine 114 is described above as a turbofan gas turbine engine. The present disclosure, however, is not limited to such an exemplary gas turbine engine. The gas turbine engine 114, for example, may alternatively be configured as a turboprop gas turbine engine, a turboshaft gas turbine engine, a turbojet gas turbine engine, a pusher fan gas turbine engine, a propfan gas turbine engine, an auxiliary power unit (APU) gas turbine engine or any other type of gas turbine engine or aircraft engine.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method for manufacturing a component, comprising:
providing a workpiece (54); and
machining an aperture into the workpiece (54) using an electrical discharge machining wire (62) supported by a guide (60A, 60B), the machining of the aperture comprising moving the guide (60A, 60B) along a guide path (90) where the electrical discharge machining wire (62) cuts the workpiece (54) along a wire path (94) that is different than the guide path (90), and a speed of the electrical discharge machining wire (62) is maintained during the cutting of the workpiece (54) along the wire path (94).

2. The method of claim 1, wherein the speed comprises a federate speed of the electrical discharge machining wire (62) longitudinally along the wire path (94).

3. The method of claim 1 or 2, wherein the speed comprises a wire speed of the electrical discharge machining wire (62).

4. The method of claim 1, 2 or 3, wherein:
the component comprises a rotor disk (24); and
the aperture comprises a slot (36) in the rotor disk (24).

5. The method of any preceding claim, wherein:
the aperture comprises a firtree slot (36); and/or
the second path follows a tortuous trajectory.

6. The method of any preceding claim, further comprising modeling the guide path (90) such that the wire path (94) substantially matches a predetermined cutting path (102), wherein, optionally, the guide path (90) is modeled based on data for another aperture previously machined using wire electrical discharge machining.

7. The method of any preceding claim, wherein the cutting of the workpiece (54) along the wire path (94) is a roughing pass for the machining of the aperture, and, optionally, the machining of the aperture further comprises performing a finishing pass and a polishing pass with the electrical discharge machining wire (62) following the roughing pass.

8. A manufacturing method, comprising:
providing a first component;
cutting a first rough cut aperture (88) into the first component using an electrical discharge machining wire (62) supported by a guide (60A, 60B), the cutting of the first rough cut aperture (88) comprising moving the guide (60A, 60B) along a first guide path (90) where the electrical discharge machining wire (62) cuts the first component along a first wire path (94) that is different than the first guide path (90);
modeling a second guide path (90) based on a comparison between data for the first wire path (94) and data for a predetermined cutting path (102);
providing a second component; and
cutting a second rough cut aperture (88) into the second component using the electrical discharge machining wire (62) supported by the guide (60A, 60B), the cutting of the second rough cut aperture (88) comprising moving the guide (60A, 60B) along the second guide path (90) where the electrical discharge machining wire (62) cuts the second component along a second wire path (94) that is different than the second guide path (90).

9. The manufacturing method of claim 8, wherein the second wire path (94) substantially matches the predetermined cutting path (102).

10. The manufacturing method of claim 8 or 9, wherein at least one of:
a speed of the electrical discharge machining wire (62) is maintained during the cutting of the first rough cut aperture (88) along the first wire path (94); or
a speed of the electrical discharge machining wire (62) is maintained during the cutting of the second rough cut aperture (88) long the second wire path (94).

11. The manufacturing method of claim 8, 9 or 10, further comprising measuring the first rough cut aperture (88) to provide the data for the first wire path (94).

12. The manufacturing method of any of claims 8 to 11, further comprising:
cutting a first finish cut aperture (104) into the first component using the electrical discharge machining wire (62), and cutting a second finish cut aperture (104) into the second component using the electrical discharge machining wire (62); and/or
cutting a first polished aperture (108) into the first component using the electrical discharge machining wire (62), and cutting a second polished aperture (108) into the second component using the electrical discharge machining wire (62).

13. The manufacturing method of any of claims 8 to 12, wherein:
the first component comprises a rotor disk (24); and
the first rough cut aperture (88) is a rough cut slot in the rotor disk (24).

14. A manufacturing method, comprising:
providing an electrical discharge machining wire (62) spanning between and supported by a first guide (60A) and a second guide (60B); and
cutting a rotor blade root slot (36) into a rotor disk (24) using the electrical discharge machining wire (62), wherein a portion (92) of the electrical discharge machining wire (62) engaging the rotor disk (24) is displaced from a reference line (70) defined by the first guide (60A) and the second guide (60B) during the cutting of the rotor blade root slot (36), wherein the first guide (60A) is moved along a guide path (90) during the cutting of the rotor blade root slot (36) at a constant speed, and wherein the guide path (90) is tailored to accommodate for the displacement between the portion (92) of the electrical discharge machining wire (62) engaging the rotor disk (24) and the reference line (70).

15. The manufacturing method of claim 14, wherein:
the guide path (90) is tailored such that a wire path (94) followed by the portion (92) of the electrical discharge machining wire (62) engaging the rotor disk (24) substantially matches a predetermined cutting path (102); and/or
the wire path (94) followed by the portion (92) of the electrical discharge machining wire (62) engaging the rotor disk (24) is different than the guide path (90) at least along curved portions of the rotor blade root slot (36).
